# DEMANDE DE BREVET EUROPEEN

(11) **EP 2 009 949 A1**
(43) Date de publication de la demande: **31.12.2008**
(21) Numéro de dépôt: 08290585.2
(22) Date de dépôt: 19.06.2008
(51) Int. Cl.: H04R 1/10, H04M 1/60

(54) **Dispositif de téléphonie sans fil, tel qu'un téléphone ou une oreillette, muni d'un haut-parleur et d'un organe de réglage automatique de volume**

(30) Priorité: 25.06.2007 FR 0755989
(71) Demandeur: Modelabs Technologies Limited, Hong Kong (HK)
(72) Inventeur: Ponticelli, Guillaume, Hong Kong (CN); Desormière, Olivier, 92190 Meudon (FR); Boussemart, Franck, 45510 Tigy (FR)
(74) Mandataire: Kedinger, Jean-Paul

(57) **Abrégé**

La présente invention se rapporte à un dispositif portable de communication téléphonique sans fil, tel qu'un téléphone cellulaire (10) ou une oreillette (20), destiné à être disposé contre ou dans l'oreille d'un utilisateur et comportant au moins un haut-parleur (13, 23), caractérisé en ce qu'il comprend un détecteur de présence humaine (28) et un organe de réglage (26) adapté pour atténuer automatiquement le volume de tout son émis par le haut-parleur (13, 23) lorsqu'une présence humaine est détectée à l'intérieur d'un périmètre déterminée autour dudit dispositif, notamment lorsque le haut-parleur (13, 23) de ce dernier est posé contre ou à proximité immédiate de l'oreille de l'utilisateur, et pour augmenter automatiquement ledit volume sonore lorsque le dispositif est en dehors dudit périmètre.

## Description

La présente invention concerne un dispositif portable de communication téléphonique sans fil, tel qu'une oreillette ou un téléphone cellulaire, comportant au moins un haut-parleur et un organe de réglage automatique du volume de tout son émis par ledit haut-parleur.

Actuellement, les téléphones cellulaires et les oreillettes, fonctionnant par exemple tous les deux selon la norme Bluetooth pour pouvoir être jumelés, possèdent un haut-parleur destiné à reproduire la voix lors d'une communication téléphonique, une sonnerie d'appel, de la musique ou tout autre type de son pouvant être émis dans le cadre de leur fonctionnement.

Or, lorsque l'oreillette ou le téléphone cellulaire est positionné(e) très proche du pavillon de l'oreille de l'utilisateur, les risques d'endommagement de l'audition peuvent être importants si le volume du son émis est trop puissant.

En effet, si le téléphone est placé en mode « mains libres » par inadvertance (appui sur la touche correspondant avec la joue de l'utilisateur), le volume du haut-parleur passe à son maximum. Le fait d'avoir le téléphone proche de l'oreille peut alors provoquer des nuisances importantes au tympan.

De même, lorsque l'oreillette est placée sur l'oreille de l'utilisateur, le son de la sonnerie d'appel, notamment s'il s'agit d'une musique, peut être trop fort et devenir insupportable, voire dangereux.

Enfin, dans le cas où le dispositif de téléphonie est équipé d'une alarme antivol qui se déclenche automatiquement lorsque l'oreillette et le téléphone cellulaire sont éloignés l'un de l'autre, au-delà d'un certain rayon d'action (déterminé par exemple par la capacité de communication aérienne de la liaison Bluetooth), ladite alarme peut causer des séquelles graves au tympan si elle se déclenche lorsque le haut-parleur est contre l'oreille.

Ainsi, il n'existe à l'heure actuelle aucun moyen permettant de régler automatiquement le volume sonore du haut-parleur d'un téléphone cellulaire ou d'une oreillette.

Un but de la présente invention est donc de résoudre le problème cité précédemment à l'aide d'une solution simple à mettre en oeuvre, fiable et peu coûteuse.

Ainsi, la présente invention a pour objet un dispositif portable de communication téléphonique sans fil, tel qu'un téléphone cellulaire ou une oreillette, destiné à être disposé contre ou dans l'oreille d'un utilisateur et comportant au moins un haut-parleur, caractérisé en ce qu'il comprend un détecteur de présence humaine et un organe de réglage adapté pour atténuer automatiquement le volume de tout son émis par le haut-parleur lorsqu'une présence humaine est détectée à l'intérieur d'un périmètre déterminée autour dudit dispositif, notamment lorsque le haut-parleur de ce dernier est posé contre ou à proximité immédiate de l'oreille de l'utilisateur, et pour augmenter automatiquement ledit volume sonore lorsque le dispositif est en dehors dudit périmètre.

Selon des modes de réalisation préférés, le dispositif selon la présente invention peut comprendre en outre l'une au moins des caractéristiques suivantes :
- l'organe de réglage automatique du volume est adapté pour atténuer ou augmenter ledit volume de manière progressive, en fonction de l'éloignement ou du rapprochement du dispositif par rapport à l'utilisateur ;
- s'agissant d'un téléphone cellulaire, l'organe de réglage automatique du volume est adapté pour faire passer ledit téléphone en mode « mains libres », avec le volume sonore du haut-parleur à son niveau maximum tant que le téléphone est en dehors du périmètre déterminé ;
- s'agissant d'une oreillette, cette dernière comprend en outre un circuit électronique conçu pour que le haut-parleur émette une alarme sonore lorsqu'elle est située en dehors d'un rayon d'action déterminé par rapport à un téléphone cellulaire avec lequel elle est jumelée selon une norme de télécommunication sans fil, par exemple la norme Bluetooth, l'organe de réglage automatique du volume étant couplé au circuit électronique pour atténuer le son de l'alarme lorsque ladite présence humaine est détectée à l'intérieur dudit périmètre ;
- l'organe de réglage automatique du volume est adapté pour augmenter le volume du son émis par le haut-parleur lorsque la présence humaine n'est pas détectée à l'intérieur dudit périmètre ;
- le détecteur de présence humaine comprend un capteur de proximité constitué par un émetteur infrarouge, ce capteur étant activé lorsqu'il est approché à moins de 10 cm environ de toute partie du corps de l'utilisateur, en particulier sa tête, et un capteur de contact constitué par deux surfaces de contact, ce capteur étant activé lorsque les deux surfaces sont simultanément au contact de la peau de l'utilisateur ;
- l'organe de réglage automatique du volume est adapté pour être activé lorsque le capteur de proximité et/ou le capteur de contact est (sont) activé(s) ; et
- l'organe de réglage automatique du volume est adapté pour atténuer le volume du son émis par le haut-parleur d'au moins 20db.

La présente invention se rapporte également à un procédé pour régler le volume sonore de tout son émis pas le haut-parleur d'un dispositif portable de communication téléphonique sans fil, tel qu'un téléphone cellulaire ou une oreillette, caractérisé en ce qu'il consiste à :
- détecter si une présence humaine se trouve à l'intérieur d'un périmètre déterminé par rapport au dispositif,
- augmenter automatiquement le volume sonore du haut-parleur si ladite présence humaine est détectée à l'intérieur du périmètre, ou atténuer automatiquement ledit volume dans le cas contraire.

Avantageusement, l'atténuation du volume est effectuée lorsque le dispositif est à l'intérieur d'un périmètre inférieur à sensiblement 10 cm par rapport à une partie du corps de l'utilisateur, en particulier lorsqu'il est placé contre ou sur l'oreille de ce dernier.

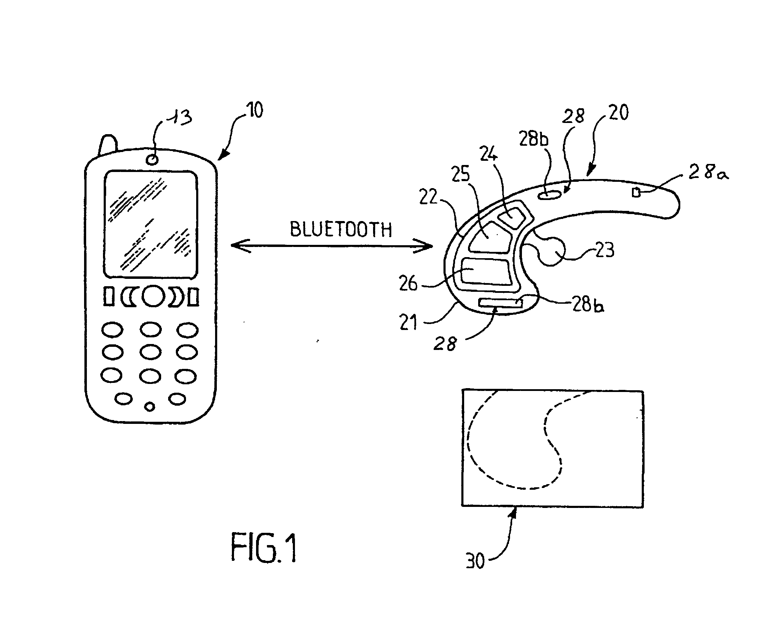

L'invention va maintenant être décrite plus en détail en référence à un mode de réalisation particulier donné à titre d'illustration uniquement et représenté sur la figure 1 représentant de manière schématique un téléphone cellulaire et une oreillette équipé d'un support adapté.

La figure 1 représente de manière schématisée un téléphone cellulaire 10 une oreillette 20 et un support 30 adapté pour recevoir cette dernière. Ces deux appareils de communication téléphonique sans fil 10 et 20 sont par exemple jumelés l'un à l'autre de manière connue grâce à une liaison sans fil de faible portée (typiquement inférieure à environ 10 m) à la norme Bluetooth.

L'oreillette 20 comporte une coque ergonomique 21 adaptée pour reposer localement de manière conventionnelle sur le pavillon de l'oreille d'un utilisateur, ou sur le support 30.

La coque 21 renferme une carte électronique 22 de type courant et nécessaire au fonctionnement de l'oreillette 20, ainsi qu'un haut-parleur externe 23 destiné à pénétrer localement dans le pavillon de l'oreille.

La carte électronique 22 comporte un circuit électronique spécifique 24 couplé avec le haut-parleur 23. Ce circuit électronique 24 permet, lorsque l'oreillette 20 se trouve éloignée du téléphone cellulaire 10 au-delà d'un rayon d'action de 10 m, de déclencher une alarme sonore émise par l'intermédiaire du haut-parleur 23 avec un volume élevé audible au-delà dudit rayon d'action.

Ainsi, lorsque l'utilisateur a perdu son oreillette 20, ou qu'elle a été volée, l'alarme sonore est émise automatiquement pour l'informer que son oreillette est hors du rayon d'action et qu'il doit donc partir à sa recherche, notamment s'il souhaite établir une communication téléphonique.

Pour cela, un circuit de détection d'éloignement 25 est prévu sur la carte électronique 22. Ce circuit de détection 25 fonctionne par mesure d'une variation de la fréquence d'apparition d'au moins un bit d'erreur dans les trames du signal numérique de données échangé entre l'oreillette 20 et le téléphone cellulaire 10.

Selon une variante de réalisation, le circuit de détection d'éloignement 25 fonctionne par mesure, au niveau de l'oreillette 20, de la diminution de puissance de réception du signal numérique de données échangé avec le téléphone cellulaire 20.

Ainsi, l'oreillette 20 est constamment informée de sa présence ou non à l'intérieur du rayon d'action déterminé par rapport au téléphone cellulaire 10.

Si l'utilisateur porte l'oreillette 20 sur son oreille et que son téléphone cellulaire 10 a été volé, perdu, ou que ce dernier se trouve tout simplement au-delà du périmètre défini, il est nécessaire de pouvoir atténuer le volume de l'alarme pour éviter d'endommager son audition.

A cet effet, la carte électronique 22 comporte un organe 26 de réglage automatique du volume de l'alarme sonore. Cet organe 26 est couplé avec un détecteur de présence humaine 28.

Ainsi, lorsque l'oreillette 20 n'est pas sur l'oreille de l'utilisateur, par exemple lorsqu'elle repose sur un support 30, l'alarme sonore conserve son volume élevé. Dans le cas contraire, lorsqu'il a été détecté que l'oreillette 20 est sur l'oreille de l'utilisateur, l'organe de réglage automatique du volume 26 se déclenche pour réduire fortement le volume de l'alarme sonore, ce qui évite d'émettre cette dernière directement dans l'oreille de l'utilisateur.

Avantageusement, le détecteur de présence humaine 28 comporte comprend un capteur de proximité 28a constitué par un émetteur infrarouge, ce capteur étant activé lorsqu'il est approché à moins de 10 cm environ de toute partie du corps de l'utilisateur, en particulier sa tête, et un capteur de contact 28b constitué par deux surfaces de contact, ce capteur étant activé lorsque les deux surfaces sont simultanément au contact de la peau de l'utilisateur.

Dans un cadre d'utilisation normale (communication en cours notamment), le fonctionnement de l'organe de réglage du volume 26 et du détecteur de présence humaine 28 de l'oreillette 20 est le suivant.

Lorsque l'oreillette 20 est placée sur l'oreille de l'utilisateur, le détecteur de présence humaine 28 est activé et le volume du son émis par le haut-parleur 23, par exemple d'une communication téléphonique en cours ou de la sonnerie d'appel entrant, est à son niveau normal ou à un niveau faible mais audible. Lorsque l'oreillette 20 est éloignée de l'oreille, par exemple de plus de 10 cm, le volume du haut-parleur 23 est augmenté automatiquement et progressivement grâce à l'organe de réglage 26 et au détecteur de présence humaine 28. Plus l'oreillette 20 est éloignée du corps de l'utilisateur, plus le volume du son du haut-parleur 23 est augmenté, jusqu'à passer dans un mode « mains libres » dans lequel le volume est à son maximum. Si l'oreillette 20 est de nouveau rapprochée de l'oreille, le volume du son est atténué automatiquement jusqu'à un niveau faible et audible lorsqu'elle se trouve dans le périmètre de 10 cm déterminé.

En ce qui concerne le téléphone cellulaire 10, le fonctionnement est identique dès lors qu'il renferme un détecteur de présence humaine et un organe de réglage de volume identiques à ceux de l'oreillette 20. Tant que le capteur de proximité et/ou le capteur de contact est (sont) activé(s), et de préférence les deux capteurs en même temps, le volume du son émis par le haut-parleur 13 est faible mais audible. Lorsque l'un et/ou l'autre des deux capteurs n'est plus activé, c'est-à-dire lorsque le téléphone est éloignée de plus de 10 cm du corps de l'utilisateur, en particulier de son oreille, le volume du haut-parleur est augmenté automatiquement petit à petit, jusqu'au mode « mains libres » dans lequel le volume est à son maximum.

La différence entre le volume maximum, c'est-à-dire en position « mains libres », et le volume le plus faible audible, c'est-à-dire lorsque le haut-parleur du téléphone ou de l'oreillette est contre ou dans le pavillon de l'oreille de l'utilisateur, est d'environ 20db

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, il est possible de prévoir que ce soit le téléphone cellulaire qui émette l'alarme sonore.

## Revendications

1. Oreillette (20) de communication téléphonique sans fil destinée à être disposée contre ou dans l'oreille d'un utilisateur et comportant au moins un haut-parleur (13, 23), **caractérisée qu'**elle comprend
- un détecteur de présence humaine (28)
- un organe de réglage (26) adapté pour atténuer automatiquement le volume de tout son émis par ledit haut-parleur (13, 23) lorsqu'une présence humaine est détectée à l'intérieur d'un périmètre déterminée autour de ladite oreillette, notamment lorsque le haut-parleur (13, 23) de cette dernière est posé contre ou à proximité immédiate de l'oreille de l'utilisateur, et pour augmenter automatiquement ledit volume sonore lorsque le dispositif est en dehors dudit périmètre, l'organe de réglage automatique du volume (26) étant adapté pour atténuer ou augmenter ledit volume de manière progressive, en fonction de l'éloignement ou du rapprochement de l'oreillette rapport à l'utilisateur, et
- un circuit électronique (24) conçu pour que le haut-parleur (23) émette une alarme sonore lorsqu'elle est située en dehors d'un rayon d'action déterminé par rapport à un téléphone cellulaire (10) avec lequel elle est jumelée selon une norme de télécommunication sans fil, par exemple la norme Bluetooth, l'organe de réglage automatique du volume (26) étant couplé au circuit électronique (24) pour atténuer le volume de l'alarme lorsque ladite présence humaine est détectée à l'intérieur dudit périmètre.

2. Oreillette selon la revendication 1, **caractérisée en ce que** l'organe de réglage automatique du volume (26) est adapté pour augmenter le volume du son émis par le haut-parleur (23) lorsque la présence humaine n'est pas détectée à l'intérieur dudit périmètre.

3. Oreillette selon la revendication 1 ou 2, **caractérisée en ce** le détecteur de présence humaine (28) comprend un capteur de proximité (28a) constitué par un émetteur infrarouge, ce capteur étant activé lorsqu'il est approché à moins de 10 cm environ de toute partie du corps de l'utilisateur, en particulier sa tête, et un capteur de contact (28b) constitué par deux surfaces, ce capteur étant activé lorsque les deux surfaces sont simultanément au contact de la peau de l'utilisateur.

4. Oreillette selon la revendication 3, **caractérisée en ce que** l'organe de réglage automatique du volume (26) est adapté pour être activé lorsque le capteur de proximité (28a) et/ou le capteur de contact (28b) est (sont) activé(s).

5. Oreillette selon l'une quelconque des revendications précédentes, **caractérisée en ce que** l'organe de réglage automatique du volume (26) est adapté pour atténuer le volume du son émis par le haut-parleur d'au moins 20db.
